# EUROPEAN PATENT APPLICATION

(11) **EP 4 742 609 A1**
(43) Date of publication of application: **13.05.2026**
(21) Application number: 24890293.4
(22) Date of filing: 04.09.2024
(51) Int. Cl.: H04L 41/0803

(54) **ROUTING DEVICE CONFIGURATION METHOD AND ROUTING DEVICE**

(30) Priority: 15.11.2023 CN 202311532343
(71) Applicant: Huawei Technologies Co., Ltd., Shenzhen, Guangdong 518129 (CN)
(72) Inventor: YAN, Haoran, Shenzhen, Guangdong 518129 (CN)
(74) Representative: Epping - Hermann - Fischer
(86) International application number: PCT/CN2024/116972
(87) International publication number: WO 2025/102933

(57) **Abstract**

A routing device configuration method and a routing device are disclosed, and relate to the field of communication technologies. The method includes: when first configuration information received by a routing device indicates to configure N downlink interfaces of the routing device to be in a bridge mode, creating N virtual bridge interfaces, configuring the N downlink interfaces and N uplink interfaces of the routing device on the N virtual bridge interfaces, and configuring wide area network IP addresses of the N uplink interfaces on the N downlink interfaces. A plurality of virtual bridge interfaces are set to bridge each of the N downlink interfaces to a corresponding uplink interface, so that the routing device can connect a plurality of devices to the Internet in the bridge mode.

## Description

### CROSS-REFERENCE TO RELATED APPLICATIONS

This application claims priority to Chinese Patent Application No. 202311532343.8, filed with the China National Intellectual Property Administration on November 15, 2023 and entitled "ROUTING DEVICE CONFIGURATION METHOD AND ROUTING DEVICE", which is incorporated herein by reference in its entirety.

### TECHNICAL FIELD

Embodiments of this application relate to the field of communication technologies, and in particular, to a routing device configuration method and a routing device.

### BACKGROUND

A routing device, for example, customer premise equipment (customer premise equipment, CPE), may be used to establish a home or office network connection. The routing device supports two networking modes: a routing mode and a bridge mode. In the routing mode, the routing device allocates a new IP address to a device connected to the routing device, and data exchange between the device and an upper-layer server is forwarded by the routing device. In the bridge mode, the routing device directly forwards, to a device connected to the routing device, a public IP address allocated to the routing device by a server connected to the routing device, and the device directly exchanges data with the server.

In the bridge mode, the routing device serves only as a transit device without processing data. Only one device connected to the routing device is able to connect to the Internet at a time. This cannot meet a requirement for access of a plurality of devices when the routing device is in the bridge mode.

### SUMMARY

Embodiments of this application provide a routing device configuration method and a routing device, to connect to a plurality of devices in a bridge mode.

According to a first aspect, a routing device configuration method is provided. The method may be performed by a routing device, or may be performed by a module, a unit, or a chip in a routing device. The method includes: receiving first configuration information, where the first configuration information indicates to configure N downlink interfaces of the routing device to be in a bridge mode, and N is a positive integer greater than 1; creating N virtual bridge interfaces based on the first configuration information; configuring the N downlink interfaces and N uplink interfaces of the routing device on the N virtual bridge interfaces, where one uplink interface and one downlink interface are configured on each of the N virtual bridge interfaces, uplink interfaces configured on different virtual bridge interfaces are different, and downlink interfaces configured on different virtual bridge interfaces are different; and configuring wide area network IP addresses of the N uplink interfaces on the N downlink interfaces, where wide area network IP addresses configured on different downlink interfaces are different.

Optionally, the first configuration information indicates an access point name (APN) corresponding to each of the N downlink interfaces, APNs corresponding to different downlink interfaces are different, and each APN corresponds to one uplink interface. A first downlink interface of the N downlink interfaces is used as an example. Configuring the N uplink interfaces of the routing device on the N virtual bridge interfaces includes: configuring, on a first virtual bridge interface based on an APN corresponding to the first downlink interface, a first uplink interface corresponding to the APN.

In the foregoing implementation, a plurality of virtual bridge interfaces (bridge) are set on the routing device, one uplink interface is set on each virtual bridge interface, and one downlink interface (for example, a LAN interface or a Wi-Fi interface) is mounted to the virtual bridge interface, so that the uplink interface is bridged to the downlink interface, and the routing device can be connected to a plurality of devices of CPE in the bridge mode.

In a possible implementation, the N downlink interfaces include N local area network LAN interfaces, or the N downlink interfaces include N Wi-Fi interfaces, or the N downlink interfaces include at least one LAN interface and at least one W-Fi interface.

In a possible implementation, the routing device includes CPE.

In a possible implementation, the method further includes: separately configuring routing rules corresponding to the N virtual bridge interfaces, where the N virtual bridge interfaces include a first virtual bridge interface, and data transmission between an uplink interface and a downlink interface that are configured on the first virtual bridge interface complies with a routing rule corresponding to the first virtual bridge interface.

In a possible implementation, the first configuration information further indicates to configure M downlink interfaces of the routing device to be in a routing mode, where the M downlink interfaces are different from the N downlink interfaces, and M is a positive integer. A second virtual bridge interface is created based on the first configuration information, where the second virtual bridge interface is different from the N virtual bridge interfaces. The M downlink interfaces and the first uplink interface are configured on the second virtual bridge interface, where the first uplink interface is an uplink interface corresponding to the M downlink interfaces. A local area network IP address is configured for each of the M downlink interfaces.

In the foregoing implementation, a part of downlink interfaces on the routing device may be configured to be in the bridge mode, and another part of downlink interfaces may be configured to be in the routing mode, so that the routing device can support both the bridge mode and the routing mode, to meet requirements of more scenarios and improve user experience.

In a possible implementation, the method further includes: configuring an address mapping rule on the second virtual bridge interface, where the address mapping rule indicates a mapping relationship between local area network IP addresses configured on the M downlink interfaces and a wide area network IP address configured on the first uplink interface.

In a possible implementation, the method further includes: receiving second configuration information, where the second configuration information indicates to modify a bridge mode of the first downlink interface of the N downlink interfaces to a routing mode, and the first downlink interface is configured on the first virtual bridge interface of the N virtual bridge interfaces; deleting configuration information of the first downlink interface from the first virtual bridge based on the second configuration information, and configuring the first downlink interface on the second virtual bridge interface; deleting a wide area network IP address configured on the first downlink interface, and configuring a local area network IP address for the first downlink interface; and configuring, on the second virtual bridge interface, a mapping relationship between the local area network IP address configured on the first downlink interface and the wide area network IP address configured on the first uplink interface.

In the foregoing implementation, a configuration of the routing device may be flexibly modified according to a user requirement.

According to a second aspect, a routing device configuration method is provided. The method may be performed by a routing device, or may be performed by a module, a unit, or a chip in a routing device. The method includes: receiving first configuration information, where the first configuration information indicates to configure N downlink interfaces of the routing device to be in a bridge mode, and configure M other downlink interfaces of the routing device to be in a routing mode, where both N and M are positive integers; creating N virtual bridge interfaces and a second virtual bridge interface based on the first configuration information; configuring the N downlink interfaces and N uplink interfaces of the routing device on the N virtual bridge interfaces, and configuring the M downlink interfaces and a first uplink interface on the second virtual bridge interface, where the first uplink interface is an uplink interface corresponding to the M downlink interfaces, one uplink interface and one downlink interface are configured on each of the N virtual bridge interfaces, uplink interfaces configured on different virtual bridge interfaces are different, and downlink interfaces configured on different virtual bridge interfaces are different; and configuring wide area network IP addresses of the N uplink interfaces on the N downlink interfaces, where WAN addresses configured on different downlink interfaces are different, and configuring a local area network IP address for each of the M downlink interfaces.

In a possible implementation, the N downlink interfaces include N local area network LAN interfaces, or the N downlink interfaces include N Wi-Fi interfaces, or the N interfaces include at least one LAN interface and at least one W-Fi interface.

In a possible implementation, the routing device includes CPE.

In a possible implementation, the method further includes: separately configuring routing rules corresponding to the N virtual bridge interfaces, where the N virtual bridge interfaces include a first virtual bridge interface, and data transmission between an uplink interface and a downlink interface that are configured on the first virtual bridge interface complies with a routing rule corresponding to the first virtual bridge interface.

In a possible implementation, the method further includes: configuring an address mapping rule on the second virtual bridge interface, where the address mapping rule indicates a mapping relationship between local area network IP addresses configured on the M downlink interfaces and a wide area network IP address configured on the first uplink interface.

According to a third aspect, a routing device is provided, and includes a unit or a module for performing the method according to any one of the implementations of the first aspect, or includes a unit or a module for performing the method according to any one of the implementations of the second aspect.

According to a fourth aspect, a routing device is provided, and includes at least one processor. The at least one processor is coupled to at least one memory. The at least one processor is configured to read a program stored in the at least one memory, to perform the method according to any one of the implementations of the first aspect, or perform the method according to any one of the implementations of the second aspect.

According to a fifth aspect, a readable storage medium is provided. The readable storage medium stores a program. When the program is executed by a routing device, the method according to any one of the implementations of the first aspect is implemented, or the method according to any one of the implementations of the second aspect is implemented.

According to a sixth aspect, a chip system is provided, and includes at least one processor. The at least one processor is coupled to at least one memory. The at least one processor is configured to read a program stored in the at least one memory, to perform the method according to any one of the implementations of the first aspect, or perform the method according to any one of the implementations of the second aspect. It should be understood that the chip system may be an independent chip apparatus, or a system including a plurality of discrete chip apparatuses.

According to a seventh aspect, a program product is provided. When the program product is run on a routing device, the device is enabled to perform the method according to any one of the implementations of the first aspect, or perform the method according to any one of the implementations of the second aspect.

### BRIEF DESCRIPTION OF DRAWINGS

FIG. 1 is a diagram of networking topologies of CPE in a routing mode and a bridge mode in the related technology;
FIG. 2 is a diagram of a network architecture to which an embodiment of this application is applicable;
FIG. 3 is a diagram of a functional structure of a routing device according to an embodiment of this application;
FIG. 4 is a schematic flowchart of a routing device configuration method according to an embodiment of this application;
FIG. 5 is a diagram of a routing device configuration interface according to an embodiment of this application;
FIG. 6 is a schematic flowchart of interaction between functional modules in a routing device according to an embodiment of this application;
FIG. 7 is a diagram of a networking topology of CPE in Example 1 according to an embodiment of this application;
FIG. 8 is a diagram of a networking topology of CPE in Example 2 according to an embodiment of this application;
FIG. 9 is a diagram of a structure of a routing device according to an embodiment of this application; and
FIG. 10 is a diagram of a structure of another routing device according to an embodiment of this application.

### DESCRIPTION OF EMBODIMENTS

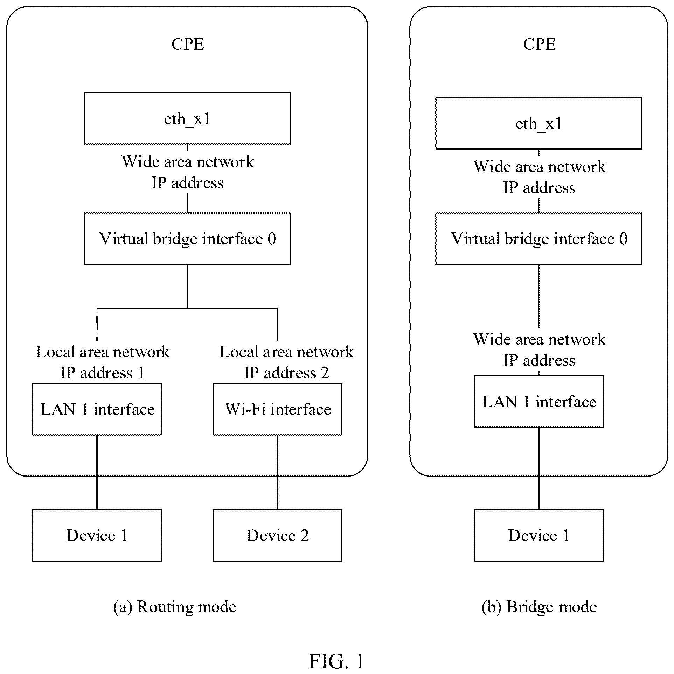

A routing device is configured to establish a home or office network connection. The routing device supports two networking modes: a routing mode and a bridge mode. For example, CPE is a routing device, and may be connected to various intelligent devices in a home, to implement an Internet access function. The CPE may connect to a 5G network in a wireless mode, for example, by using a subscriber identity module (subscriber identity module, SIM); or may connect to the Internet in a wired mode, for example, through broadband access. It should be understood that the routing device includes but is not limited to the CPE, a router, a mobile router, and a mobile phone, a tablet computer, a notebook computer, or the like that has a routing function. The CPE is used as an example. (a) in FIG. 1 shows an example networking mode in a routing mode. (b) in FIG. 1 shows an example networking topology structure in a bridge mode.

As shown in (a) in FIG. 1, after obtaining a wide area network IP address (also referred to as a public network IP address) in the routing mode, the CPE does not directly configure the wide area network IP address for a device connected to the CPE, but allocates a new IP address (for example, a local area network IP address, also referred to as a private network IP address) to the device connected to the CPE. Data exchanged between the device and a server is forwarded through the CPE. One wide area network IP address may be mapped to a plurality of local area network IP addresses, so that a plurality of devices can be connected to the CPE.

As shown in (b) in FIG. 1, in the bridge mode, the CPE is equivalent to a bridge pipeline, and the CPE directly sends, to the device connected to the CPE, a wide area network IP address allocated by the server to the CPE. The device directly exchanges data with the server.

As shown in FIG. 1, the CPE has only one virtual bridge interface (for example, a virtual bridge interface 0 in the figure). In the routing mode, both a local area network (local area network, LAN) interface and a Wi-Fi interface of the CPE are configured on the virtual bridge interface. In the bridge mode, a LAN interface is configured on the virtual bridge interface. In the bridge mode, only one device connected to the CPE can be connected to the Internet at a time.

In some scenarios, a plurality of devices connected to the routing device need to perform communication by using a wide area network IP address. To be specific, the routing device needs to use the bridge mode as a networking mode to connect the plurality of devices to the Internet. For example, devices such as a camera or an internet protocol television (internet protocol television, IPTV) are connected to the routing device in the bridge mode at the same time. The camera is used as an example. A plurality of cameras are disposed in a house, and a user needs to remotely view images captured by the plurality of cameras. In the bridge mode, the current routing device allows only one device connected to the routing device to connect to the Internet at a time. Therefore, the current routing device cannot meet the foregoing requirement.

In view of this, embodiments of this application provide a routing device configuration method and a related apparatus, to enable a plurality of devices to connect to the Internet in a bridge mode.

The following describes embodiments of this application in detail with reference to the accompanying drawings.

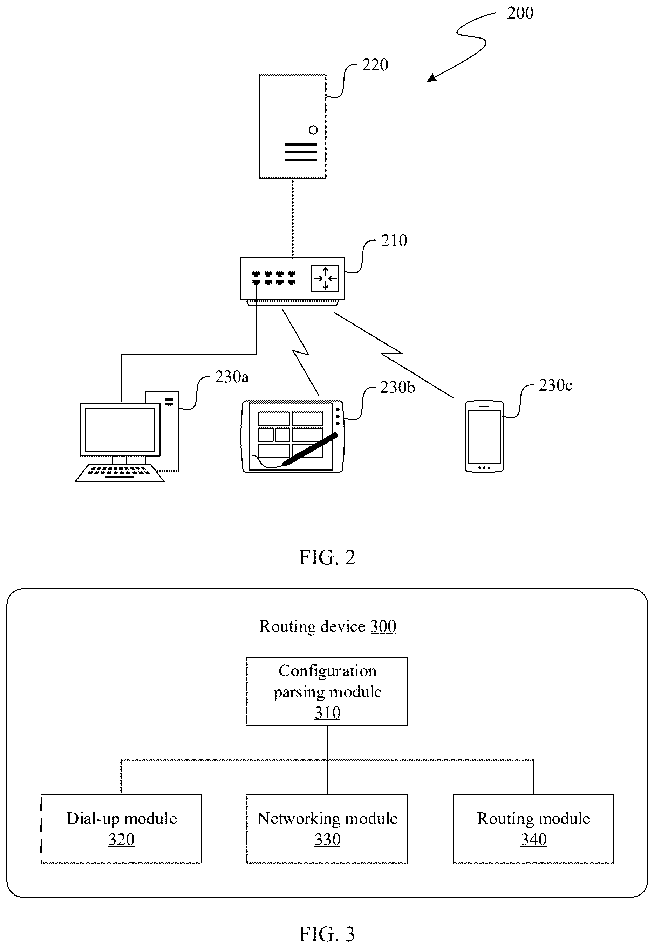

FIG. 2 is a diagram of a system architecture according to an embodiment of this application.

As shown in the figure, the system architecture 200 includes a routing device 210, a server 220, a device 230a, a device 230b, and a device 230c.

The routing device 210 is provided with one or more uplink interfaces and one or more downlink interfaces. The uplink interface may include a wired interface and/or a wireless interface. The wired interface may be an interface generated after wired dial-up through an Ethernet cable succeeds. The wireless interface may be an interface obtained through virtualization after cellular wireless dial-up succeeds. The downlink interface may include a wired interface and/or a wireless interface. The wired interface may be a LAN interface, for example, an Ethernet cable interface or a universal serial bus (universal serial bus, USB) interface. The wireless interface may be a Wi-Fi interface.

The uplink interface may also be referred to as an upstream interface, and the downlink interface may also be referred to as a downstream interface.

The routing device 210 includes CPE, a router, a mobile router, or another device (for example, a mobile phone, a tablet computer, or a notebook computer) that has a similar function. This is not limited in this application.

The server 220 may be connected to the uplink interface of the routing device 210 in a wired or wireless mode. For example, the server 220 may be connected to the uplink interface of the routing device 210 in the wired mode (for example, through a network cable), or the server 220 may be connected to the uplink interface of the routing device 210 in the wireless mode.

It should be understood that the server 220 includes a service server. For example, the server 220 includes a hypertext transfer protocol (hypertext transfer protocol, HTTP) service server or a virtual private network (virtual private network, VPN) service server.

The device 230a, the device 230b, and the device 230c may be connected to the downlink interface of the routing device 210 in a wireless or wired mode. For example, the device 230a, the device 230b, and the device 230c may be connected to the LAN interface through the network cable, or may be connected to the Wi-Fi interface of the routing device in the wireless mode.

Optionally, the device 230a, the device 230b, and the device 230c may include a device that provides voice and/or data connectivity for a user, and specifically, include a device that provides voice for the user, or include a device that provides data connectivity for the user, or include a device that provides voice and data connectivity for the user. For example, the device may be a handheld device with a wireless connection function or a processing device connected to a wireless modem. For example, the device may include a mobile phone (or referred to as a "cellular" phone), a computer with a mobile device, or a portable, pocket-sized, handheld, or personal computer. For another example, the device may include a personal communication service (personal communication service, PCS) phone, a cordless telephone, a session initiation protocol (session initiation protocol, SIP) phone, a wireless local loop (wireless local loop, WLL) station, or a personal digital assistant (personal digital assistant, PDA).

Optionally, another routing device may be further connected to the downlink interface of the routing device 210, and the another routing device may be connected to one or more devices. That is, a plurality of routing devices may be cascaded to connect the device to the Internet.

It should be understood that the system architecture shown in FIG. 2 is merely an example. In some other system architectures, a routing device may be connected to more or fewer devices, or may be connected to more servers. This is not limited in this application.

FIG. 3 is a diagram of a structure of a routing device according to an embodiment of this application.

As shown in FIG. 3, the routing device 300 may include the following functional modules: a configuration parsing module 310, a dial-up module 320, a networking module 330, and a routing module 340.

The configuration parsing module 310 is configured to parse received configuration information of the routing device, and distribute information obtained through parsing to the dial-up module 320 and the networking module 330. Configuration information sent to the dial-up module 320 includes an access point name (access point name, APN), and configuration information sent to the networking module 330 includes a mode type of a downlink interface. The mode type of a downlink interface includes a routing mode or a bridge mode.

The dial-up module 320 is responsible for performing multi-channel or single-channel dial-up based on an APN specified by a user. After the dial-up succeeds, wide area network IP address information including, for example, a wide area network IP address and a subnet mask thereof, may be obtained.

The networking module 330 is responsible for creating and configuring a virtual bridge interface based on the received mode type of the downlink interface.

The routing module 340 is responsible for setting a corresponding routing rule based on a related configuration after the dial-up succeeds.

For a specific configuration operation for the routing device 300, refer to the following descriptions.

It should be understood that the foregoing structure of the routing device 300 is merely a possible example. In some other examples, the foregoing two or more functional modules may be combined, or the foregoing functional modules may be further split. This is not limited in this application.

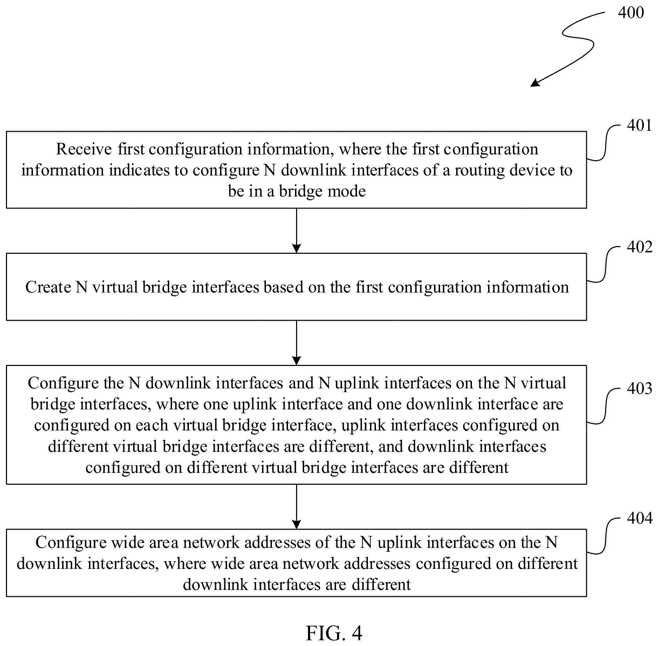

FIG. 4 is a schematic flowchart of a routing device configuration method according to an embodiment of this application. According to the method, a routing device can allow a plurality of devices to connect to the Internet in a bridge mode. The method provided in this embodiment of this application is performed by a routing device, for example, the routing device 210 in FIG. 2. It should be understood that the process may alternatively be implemented by a chip, a unit, or a module that has a function of a routing device. This is not limited in this application.

As shown in FIG. 4, the method 400 may include the following steps.

Step 401: The routing device receives first configuration information, where the first configuration information indicates to configure N downlink interfaces of the routing device to be in a bridge mode, and N is a positive integer greater than or equal to 1.

Optionally, the N downlink interfaces include N LAN interfaces, or the N downlink interfaces include N Wi-Fi interfaces, or the N downlink interfaces include at least one LAN interface and at least one W-Fi interface.

Optionally, the first configuration information may include information, a mode type, and a corresponding APN of each of the N downlink interfaces.

The APN is a name used when a wireless network service provider provides wireless access for a device. In a mobile communication network, the APN is used to identify and locate a packet data network (packed data network, PDN) needed by a mobile device. The APN may be understood as a unique identifier, and the mobile device may be connected to the corresponding PDN through the identifier. The PDN includes, for example, an enterprise intranet, the Internet, a wireless application protocol (wireless application protocol, WAP) website, an industry intranet, or another private network.

Information about a downlink interface may be an identifier and/or address information of the downlink interface. An identifier of a downlink interface is usually preconfigured on the routing device, and address information of the downlink interface may be configured by the routing device. A mode type of a downlink interface includes a bridge mode or a routing mode. In this embodiment of this application, mode types of the N interfaces are set to the bridge mode. An APN corresponding to a downlink interface may be a default APN or an APN specified by a user (or set by a user). When N is greater than 1 (in other words, when a plurality of downlink interfaces are configured to be in the bridge mode), APNs corresponding to different downlink interfaces are different, and each APN corresponds to one uplink interface. It should be understood that the APN or a wide area network IP address obtained after APN-based dial-up succeeds is configured on the uplink interface of the routing device. Therefore, it can be considered that there is a correspondence between the APN and the uplink interface.

Optionally, the first configuration information is configuration information that is set by a user, and the first configuration information is used to set a networking mode of the routing device.

In this embodiment of this application, the networking mode of the routing device may be configured by using an application program or a world wide web (world wide web, Web) configuration interface, or in another manner. In this embodiment of this application, configuring a plurality of downlink interfaces of the routing device to be in the bridge mode is allowed.

For example, the routing device is configured by using the web configuration interface. A configuration process may include the following steps: A device, for example, a mobile phone or a tablet computer, is connected to default Wi-Fi of the routing device (a name of the default Wi-Fi is usually printed on a nameplate of the routing device). After the device, for example, the mobile phone, is connected to the default Wi-Fi, a web configuration page of the routing device is displayed on a screen of the device. A user may select a downlink interface of the routing device, an APN corresponding to the downlink interface, and a mode type (the mode type includes a bridge mode or a routing mode) of the downlink interface on the web configuration page. After the user submits configuration information to the routing device, the routing device may complete networking configuration based on the received configuration information.

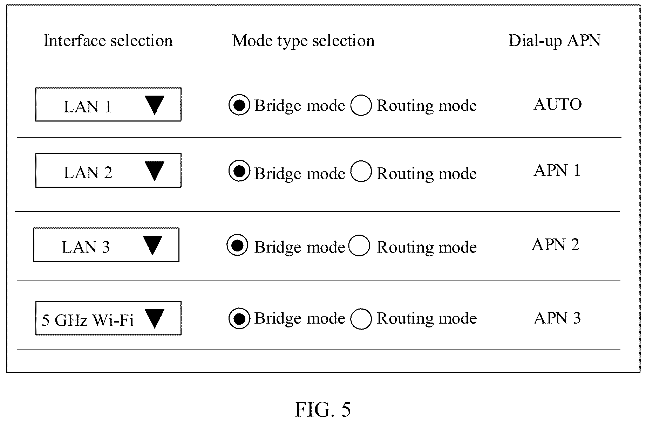

FIG. 5 is a diagram of an example routing device configuration interface. FIG. 5 is described by using an example in which the routing device has four downlink interfaces, and the four downlink interfaces are LAN 1, LAN 2, LAN 3, and 5 GHz Wi-Fi. As shown in FIG. 5, the web configuration page of the routing device provides configuration options of at least four downlink interfaces for a user to select or set. As shown in the figure, a configuration item of a downlink interface may include the following items: an Interface selection item, a Mode type selection item, and a Dial-up APN configuration item. The Interface selection item provides a drop-down list box. The drop-down list box includes a downlink interface list of the routing device, for example, the LAN 1, the LAN 2, the LAN 3, and the 5 GHz Wi-Fi. The user is allowed to select a downlink interface from the drop-down list box for configuration. The Mode type selection item includes a bridge mode switch button and a routing mode switch button, used for the user to select a mode type (in other words, a networking mode) of a downlink interface. The APN configuration item is used to configure an APN corresponding to a downlink interface. In this embodiment of this application, configuring a default APN for a downlink interface. For example, "AUTO" shown in FIG. 5 indicates that the user requests the routing device to configure the default APN for the LAN 1 interface. The default APN is preconfigured on the routing device. In this embodiment of this application, the user is also allowed to specify a specific APN for a downlink interface. For example, "APN 1" shown in FIG. 5 is an APN specified for the "LAN 2" interface.

Optionally, on the configuration interface shown in FIG. 5, the APN 1 may be displayed as an identifier, or may be displayed as information (referred to as APN information in this embodiment of this application) that is easy to understand and memorize by a user, for example, an abbreviation of a name of a network operator, or an abbreviation of a name of a network provided by a network operator. This is not limited in this application.

It should be understood that, for an APN, an identifier and APN information of the APN are in a one-to-one correspondence, and both can identify the APN. In some embodiments of this application, the APN and the APN information are interchangeable.

Based on the web configuration page shown in FIG. 5, the downlink interfaces LAN 1, LAN 2, LAN 3, and 5 GHz Wi-Fi may be configured to be in the bridge mode.

It should be understood that FIG. 5 is merely an example diagram of a possible web configuration page of the routing device. This is not limited in this embodiment of this application.

Step 402: The routing device creates N virtual bridge interfaces based on the received first configuration information.

In this step, because the first configuration information indicates to configure the N downlink interfaces to be in the bridge mode, the routing device configures one virtual bridge interface for each downlink interface.

The virtual bridge interface may be understood as a logical interface, a functional module, a functional unit, an instance, a process, a thread, or the like. Information about a downlink interface (for example, an identifier of the downlink interface) and APN information corresponding to the downlink interface (or uplink interface information and/or wide area network IP address information corresponding to the APN) may be configured on a virtual bridge interface corresponding to the downlink interface. During data transmission, the virtual bridge interface may forward data from the downlink interface to an uplink interface corresponding to an APN configured on the virtual bridge interface, to transmit, to a corresponding network through the uplink interface, data of a device connected to the downlink interface.

Step 403: The routing device configures the N downlink interfaces and N uplink interfaces of the routing device on the N virtual bridge interfaces.

The routing device may configure information about the N downlink interfaces and information about the N uplink interfaces on the N virtual bridge interfaces, to implement configuration of the virtual bridge interface.

Information about one uplink interface and information about one downlink interface are configured on each of the N virtual bridge interfaces, uplink interface information configured on different virtual bridge interfaces is different, and downlink interface information configured on different virtual bridge interfaces is different. Information about a downlink interface and information about an uplink interface are configured on a virtual bridge interface, to implement bridging between the downlink interface and the uplink interface.

Optionally, the information about the downlink interface may be an identifier and/or address information of the downlink interface. This is not limited in this application. The identifier of the downlink interface may be preconfigured on the routing device, and the address information of the downlink interface may be configured by the routing device.

Optionally, the information about the downlink interface may be at least one of the following: an identifier of the downlink interface, APN information, wide area network IP address information obtained after dial-up based on the APN succeeds, or a pseudo address corresponding to the wide area network IP address information. The pseudo address is in a one-to-one correspondence with a wide area network IP address.

FIG. 5 is used as an example. In the first configuration information of the routing device shown in the figure, the LAN 1 interface is configured to be in the bridge mode, and a corresponding APN is the default APN. On the routing device, the default APN is configured on a WAN 1 interface. In other words, an uplink interface corresponding to the default APN is the WAN 1. Based on the first configuration information, in step 402, the routing device creates four virtual bridge interfaces: a virtual bridge interface 1, a virtual bridge interface 2, a virtual bridge interface 3, and a virtual bridge interface 4. In step 403, the routing device configures an identifier of the LAN 1 and information about the default APN (or a WAN interface identifier corresponding to the default APN) on the virtual bridge interface 1, configures an identifier of the LAN 2 and information about the APN 1 (or a WAN interface identifier corresponding to the APN 1) on the virtual bridge interface 2, configures an identifier of the LAN 3 and an identifier of an APN 2 (or a WAN interface identifier corresponding to the APN 2) on the virtual bridge interface 3, and configures an identifier of the 5 GHz Wi-Fi interface and information about an APN 3 (or a WAN interface identifier corresponding to the APN 3) on the virtual bridge interface 4.

Optionally, the routing device may further configure address information for each virtual bridge interface. The address identifies the virtual bridge interface, and is used to configure a routing rule.

Step 404: The routing device configures wide area network IP addresses of the N uplink interfaces on the N downlink interfaces, where wide area network IP addresses configured on different downlink interfaces are different.

Optionally, the routing device may perform a dial-up process by using a specified APN. After the dial-up succeeds, the routing device obtains wide area network IP address information corresponding to the APN, including, for example, a wide area network IP address (WAN IP address) and a subnet mask. The routing device configures the wide area network IP address information on a corresponding downlink interface.

FIG. 5 is used as an example. The routing device performs dial-up by using the default APN to obtain a WAN IP address 1, performs dial-up by using the APN 1 to obtain a WAN IP address 2, performs dial-up by using the APN 2 to obtain a WAN IP address 3, and performs dial-up by using the APN 3 to obtain a WAN IP address 4. The routing device configures the WAN IP address 1 on the LAN 1 interface, configures the WAN IP address 2 on the LAN 2 interface, configures the WAN IP address 3 on the LAN 3 interface, and configures the WAN IP address 4 on the 5 GHz Wi-Fi interface.

In a possible implementation, the method may further include the following step: The routing device separately configures routing rules corresponding to the N virtual bridge interfaces. A first virtual bridge interface of the N virtual bridge interfaces is used as an example. A routing rule corresponding to the first virtual bridge interface is used for data transmission between an uplink interface and a downlink interface that are configured on the first virtual bridge interface. In other words, the routing rule corresponding to the first virtual bridge interface is used to guide data transmission between the uplink interface and the downlink interface that are configured on the first virtual bridge interface, or data transmission between the uplink interface and the downlink interface complies with the routing rule.

For example, the routing rule configured on the first virtual bridge interface indicates the first virtual bridge interface not to perform address translation on data from the downlink interface configured on the first virtual bridge interface. To be specific, a source address is still a wide area network IP address. The wide area network IP address is a wide area network IP address configured on the downlink interface. The first virtual bridge interface directly routes the data to the uplink interface configured on the first virtual bridge interface to send the data. In other words, the first virtual bridge interface directly sends, based on an APN configured on the first virtual bridge interface, the data to a network corresponding to the APN.

According to the foregoing embodiment of this application, a plurality of downlink interfaces of a routing device may be configured to be in a bridge mode, so that the routing device can allow a plurality of devices connected to the routing device to simultaneously connect to the Internet in the bridge mode, in other words, allow a plurality of devices to simultaneously connect to the Internet through the routing device in the bridge mode. In this way, the routing device is applicable to a more complex scenario, to improve user experience. For example, the routing device is applicable to a scenario in which a plurality of devices need to perform access by using a wide area network IP address.

For example, when a plurality of (for example, two or more) cameras are disposed in a house, the plurality of cameras may be respectively connected to a plurality of downlink interfaces of the routing device, and the plurality of downlink interfaces of the routing device are configured to be in a bridge mode according to the manner provided in this embodiment of this application. In this way, the plurality of cameras may simultaneously perform uplink data transmission through the routing device by using a wide area network IP address, so that a user can remotely and simultaneously view images captured by the N cameras.

In some embodiments of this application, when one or more downlink interfaces of the routing device are configured to be in the bridge mode, one or more other downlink interfaces may be further configured to be in a routing mode, so that the routing device supports both the bridge mode and the routing mode.

For example, in a possible implementation, the first configuration information further indicates to configure M (M is a positive integer greater than or equal to 1) downlink interfaces of the routing device to be in the routing mode, where the M downlink interfaces are different from the N downlink interfaces. The routing device creates a second virtual bridge interface based on the first configuration information, where the second virtual bridge interface is different from the N virtual bridge interfaces. The routing device configures the M downlink interfaces and the first uplink interface on the second virtual bridge interface, where the first uplink interface is an uplink interface corresponding to the M downlink interfaces.

The routing device further configures a local area network IP address for each of the M downlink interfaces. In a possible implementation, the routing device may configure local area network IP addresses for the M downlink interfaces based on local area network IP addresses that are set by the user. In another possible implementation, the routing device may autonomously configure local area network IP addresses for the M downlink interfaces. For example, a dynamic host configuration protocol (dynamic host configuration protocol, DHCP) service function is enabled, to automatically configure local area network IP addresses for the M downlink interfaces through a DHCP service. This is not limited in this application.

Optionally, the routing device may further configure an address mapping rule on the second virtual bridge interface, where the address mapping rule indicates a mapping relationship between the local area network IP addresses configured on the M downlink interfaces and a wide area network IP address configured on the first uplink interface.

Optionally, the routing device may further configure address information for the second virtual bridge interface. The address information of the second virtual bridge interface may be a gateway address of an IP address range corresponding to a downlink interface configured on the virtual bridge interface. For example, if the IP address range corresponding to the downlink interface is 192.168.8.0/24, a corresponding gateway address is 192.168.8.1.

Optionally, the routing device may further configure a routing rule corresponding to the second virtual bridge interface. The routing rule corresponding to the second virtual bridge interface is used for data transmission between an uplink interface and a downlink interface that are configured on the second virtual bridge interface. In other words, the routing rule corresponding to the second virtual bridge interface is used to guide data transmission between the uplink interface and the downlink interface that are configured on the second virtual bridge interface, or data transmission between the uplink interface and the downlink interface that are configured on the second virtual bridge interface complies with the routing rule corresponding to the second virtual bridge interface.

For example, a virtual bridge interface br0 corresponds to the APN 1, a virtual bridge interface br1 corresponds to the APN 2, the APN 1 corresponds to an uplink interface eht_x1, and the APN 2 corresponds to an uplink interface eth_x2. In this case, a routing module in the routing device may configure a routing rule by executing the following instructions.
(1) Configure a default routing rule.
   ip route add default via 10.xx.xx.1 dev eth_x1;
   10.xx.xx.1 represents a pseudo address configured on the uplink interface eth_x1. The pseudo address corresponds to the APN 1, in other words, corresponds to a wide area network IP address obtained through dial-up based on the APN 1, and is used to send a packet received by the routing device from the outside to the uplink interface eth_x1. For example, according to the routing rule, after receiving a packet from a server, the routing device may modify a source address of the packet to the pseudo address configured on the uplink interface eth_x1.
   ip route add default via 10.xx.xx.2 dev eth_x2;
   10.xx.xx.2 represents a pseudo address configured on the uplink interface eth_x2. The pseudo address corresponds to the APN 2, in other words, corresponds to a wide area network IP address obtained through dial-up based on the APN 2, and is used to send a packet received by the routing device from the outside to the uplink interface eth_x2. For example, according to the routing rule, after receiving a packet from a server, the routing device may modify a source address of the packet to the pseudo address configured on the uplink interface eth_x2.
(2) Configure a routing rule from a downlink interface to a virtual bridge interface.
   ip route add 192.168.8.0/24 dev br0 proto kernel scope link src 192.168.8.1;
   192.168.8.1 is a gateway address configured on the virtual bridge interface br0. In other words, 192.168.8.1 is an address of the virtual bridge interface br0. 192.168.8.0/24 represents an IP address range. The routing rule may be used to send, to the virtual bridge interface br0, a packet that comes from a downlink interface and whose source address is within the address range of 192.168.8.0/24.
   ip route add 192.168.9.0/24 dev br1 proto kernel scope link src 192.168.9.1;
   192.168.9.1 is a gateway address configured on the virtual bridge interface br1. In other words, 192.168.9.1 is an address of the virtual bridge interface br1. 192.168.9.0/24 represents an IP address range. The routing rule may be used to send, to the virtual bridge interface br1, a packet that comes from a downlink interface and whose source address is within the address range of 192.168.9.0/24.
(3) For a downlink interface and an uplink interface that are configured on a virtual bridge interface, configure a routing rule between the uplink interface and the downlink interface.

Similarly, for the uplink interface eth_x1 and a downlink interface (within an address range of 192.168.8.0/24) that are configured on the virtual bridge interface br0, the routing device may further configure a routing rule between the uplink interface and the downlink interface. The routing rule is used together with the foregoing configured routing rule, to forward, to the uplink interface eth_x1, a packet that comes from the downlink interface and that is within the address range of 192.168.8.0/24.

Similarly, for the uplink interface eth_x2 and a downlink interface (within an address range of 192.168.9.0/24) that are configured on the virtual bridge interface br1, the routing device may further configure a routing rule between the uplink interface and the downlink interface. The routing rule is used together with the foregoing configured routing rule, to forward, to the uplink interface eth_x2, a packet that comes from the downlink interface and that is within the address range of 192.168.9.0/24.

For example, the routing rule configured on the second virtual bridge interface indicates the second virtual bridge interface to perform, based on a mapping relationship between a local area network IP address and a wide area network IP address, address translation on data from the downlink interface configured on the second virtual bridge interface, to be specific, convert a source address from a local area network IP address to a corresponding wide area network IP address based on the mapping relationship. The second virtual bridge interface routes data obtained through address translation to the uplink interface configured on the second virtual bridge interface for sending. In other words, the second virtual bridge interface sends, based on an APN configured on the second virtual bridge interface, the data to a network corresponding to the APN.

Optionally, the routing device may further configure some data filtering rules (for example, a firewall) on the second virtual bridge interface. When receiving data from the downlink interface configured on the second virtual interface, the second virtual bridge interface may perform data processing according to the data filtering rule, and route processed data to the uplink interface configured on the second virtual bridge interface for sending.

In some other embodiments, after configuring the N downlink interfaces to be in the bridge mode based on the first configuration information, the routing device may further configure the M downlink interfaces of the routing device to be in the routing mode based on received new configuration information. To be specific, configuration information for configuring the N interfaces to be in the bridge mode and configuration information for configuring the M downlink interfaces to be in the routing mode are separately submitted to the routing device. Regardless of whether same configuration information is used to indicate the routing device to configure the N interfaces to be in the bridge mode and configure the M interfaces to be in the routing mode, or different configuration information is used to indicate the routing device to configure the N interfaces to be in the bridge mode and configure the M interfaces to be in the routing mode, a configuration method for the routing device is the same as the configuration method provided in the foregoing embodiment, and is not repeated herein.

According to the foregoing embodiment of this application, a part of downlink interfaces of a routing device may be configured to be in a bridge mode, and another part of downlink interfaces are configured to be in a routing mode, so that the routing device can support both the bridge mode and the routing mode. In this way, the routing device is applicable to a more complex scenario, to improve user experience.

For example, the method provided in this embodiment of this application may be used to meet the following requirement: When a user is outdoors, a mobile phone of the user may be connected to CPE disposed outdoors, and connect to the Internet through Wi-Fi provided by the CPE. The CPE is further connected to a router disposed indoors. When the user is indoors, the mobile phone of the user may connect to the Internet through Wi-Fi provided by the router disposed indoors. In this way, the mobile phone of the user can connect to the Internet regardless of whether the user is indoors or outdoors. A specific implementation is as follows: CPE is disposed outdoors. A downlink interface (for example, a first downlink interface) of the CPE is configured to be in a bridge mode, and is connected to a router disposed indoors. One or more downlink interfaces of the router may be configured to be in a routing mode, so that a device connected to the one or more downlink interfaces can connect to the Internet through Wi-Fi provided by the router. Another downlink interface (for example, a second downlink interface) of the CPE is configured to be in a routing mode, so that a device connected to the second downlink interface of the CPE can connect to the Internet through Wi-Fi provided by the CPE.

In some embodiments of this application, a mode type of a downlink interface of the routing device may be further modified. When a user requests, by using configuration information, to modify a bridge mode of a downlink interface to a routing mode, the routing device removes the downlink interface from an original virtual bridge interface (in other words, deletes a configuration of the downlink interface on the virtual bridge interface), and mounts the downlink interface to an existing virtual bridge interface (in other words, configures the downlink interface on the existing virtual bridge interface). The existing virtual bridge interface is a virtual bridge interface on which a downlink interface in a routing mode is configured.

Specifically, the routing device receives second configuration information, where the second configuration information indicates to modify a bridge mode of a first downlink interface of the N downlink interfaces to a routing mode, and the first downlink interface is configured on the first virtual bridge interface of the N virtual bridge interfaces. The routing device deletes configuration information of the first downlink interface from the first virtual bridge based on the second configuration information, and configures the first downlink interface on the second virtual bridge interface. The routing device deletes a wide area network IP address configured on the first downlink interface, and configures a local area network IP address for the first downlink interface. The routing device configures mapping relationship information on the second virtual bridge interface, where the mapping relationship information indicates a mapping relationship between the local area network IP address configured on the first downlink interface and the wide area network IP address configured on the first uplink interface.

For example, a networking module in the routing device may execute the following instruction to implement an operation of removing a second downlink interface LAN 2 of the routing device from the original virtual bridge interface br0:
brctl delif br0 eth0.2, where br0 represents an identifier of a virtual bridge interface 0, eth0.2 indicates that an uplink interface eht0 and the second downlink interface LAN 2 on the routing device are configured on the virtual bridge interface, and delif represents an operator of the removal operation.

For example, the networking module in the routing device may execute the following instruction to implement a mounting operation of mounting the downlink interface LAN 2 to the virtual bridge interface br1:
brctl addif br1 eth0.2, where br1 represents an identifier of a virtual bridge interface 1, eth0.2 indicates that the uplink interface eht0 and the second downlink interface LAN 2 on the routing device are configured on the virtual bridge interface, and addif represents an operator of the mounting operation.

Optionally, if there is no virtual bridge interface on which a downlink interface in a routing mode is configured, the routing device may first create a virtual bridge interface; and then configure the first downlink interface on the newly created virtual bridge interface, and configure address mapping relationship information on the newly created virtual bridge interface, where the address mapping relationship information indicates the mapping relationship between the local area network IP address configured on the first downlink interface and the wide area network IP address configured on the first uplink interface.

In some other embodiments of this application, a routing mode of a downlink interface of the routing device may be further modified to a bridge mode. A specific implementation is similar to the foregoing implementation of modifying a bridge mode of a downlink interface to a routing mode. When a user requests, by using configuration information, to modify a routing mode of a downlink interface to a bridge mode, the routing device removes the downlink interface from an original virtual bridge interface, creates a new virtual bridge interface, mounts the downlink interface to the newly created virtual bridge interface, and configures a wide area network IP address on the downlink interface and/or the new virtual bridge interface.

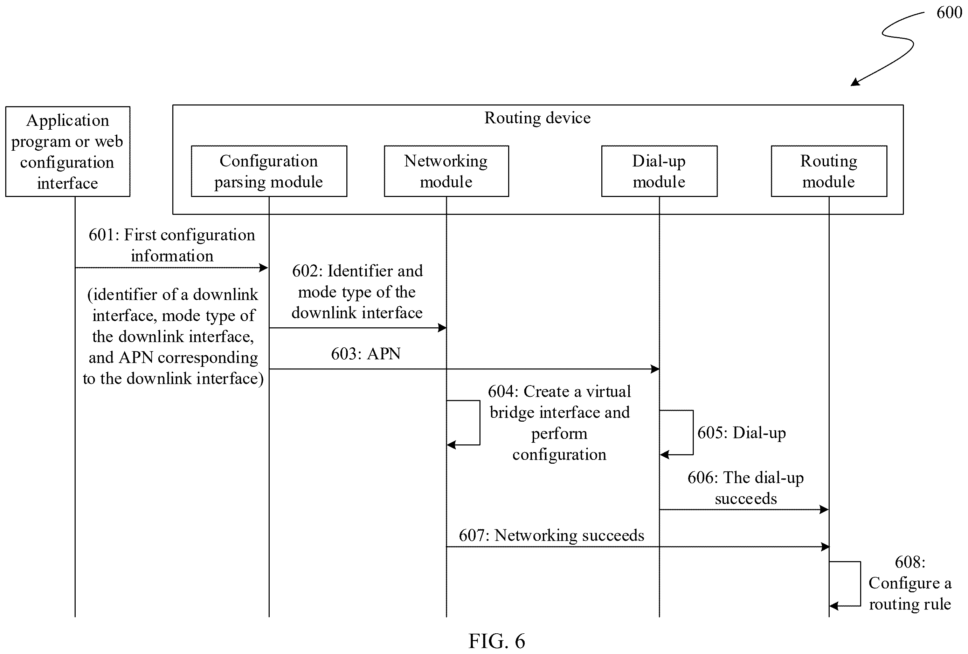

Based on the structure of the functional modules of the routing device shown in FIG. 3, a possible implementation process of the method shown in FIG. 4 may be shown in FIG. 6.

As shown in FIG. 6, the method 600 may include the following steps.

Step 601: The configuration parsing module in the routing device receives configuration information from an application program or a web configuration page used to configure the routing device.

In this step, a user sends the configuration information by using a web configuration interface or an application program. The configuration information includes an identifier, a mode type, and a corresponding APN of each of one or more downlink interfaces. An example of the configuration information is the first configuration information in FIG. 4.

Step 602 and step 603: The configuration parsing module sends the identifier and the mode type of the downlink interface to the networking module, and sends the APN of the downlink interface to the dial-up module.

In this step, after receiving the configuration information, the routing device parses the configuration information, and sends related information to a corresponding module, for example, sends the identifier and the mode type of the downlink interface to the networking module, and sends the APN to the dial-up module.

Step 604: After receiving the identifier and the mode type of the downlink interface, the networking module creates a virtual bridge interface and configures the virtual interface.

After receiving the identifier and the mode type of the downlink interface, the networking module determines a quantity of virtual bridge interfaces based on the mode type of the downlink interface, and creates a corresponding quantity of virtual bridge interfaces. For example, the configuration information indicates that a LAN 1 interface, a LAN 2 interface, and a 2.4 GHz Wi-Fi interface are in a routing mode, and a LAN 3 interface, a LAN 4 interface, and a 5 GHz Wi-Fi interface are in a bridge mode. In this case, four virtual bridge interfaces need to be created. The LAN 1 interface, the LAN 2 interface, and the 2.4 GHz Wi-Fi interface are configured on a virtual bridge interface 1. The LAN 3 interface is configured on a virtual bridge interface 2. The LAN 4 interface is configured on a virtual bridge interface 3. The 5 GHz Wi-Fi interface is configured on a virtual bridge interface 4. To be specific, downlink interfaces in the routing mode may be configured on a same virtual bridge interface, and each downlink interface in the bridge mode is configured on a corresponding virtual bridge interface.

For a specific implementation of this step, refer to the foregoing embodiments.

Step 605: After receiving the APN, the dial-up module performs dial-up based on the APN.

In this step, after receiving the APN, the dial-up module uses the APN to trigger a dial-up process. After the dial-up succeeds, information, such as a WAN IP address and a subnet mask that correspond to the APN, may be obtained.

Step 606: After the dial-up succeeds, the dial-up module sends a notification message to the routing module. Optionally, the notification message may include information, such as the WAN IP address and the subnet mask, that is obtained after the dial-up succeeds.

Step 607: After completing the configuration of the virtual bridge interface, the networking module sends a notification message to the routing module.

Step 608: The routing module configures a routing rule after receiving a networking success notification from the networking module and a dial-up success notification from the dial-up module.

In this step, after receiving the notification message indicating that the dial-up succeeds and the notification message indicating that networking succeeds, the routing module starts routing rule setting, and sets a corresponding routing rule based on the WAN IP address and a networking topology, to route data of a corresponding downlink interface to a specified uplink interface.

It should be understood that an order of the steps in the process shown in FIG. 6 is merely a possible example. This is not limited in this application.

Based on the process of the method shown in FIG. 4 or FIG. 6, FIG. 7 and FIG. 8 are diagrams of networking topologies of CPE that are implemented according to the method shown in FIG. 4 or FIG. 6.

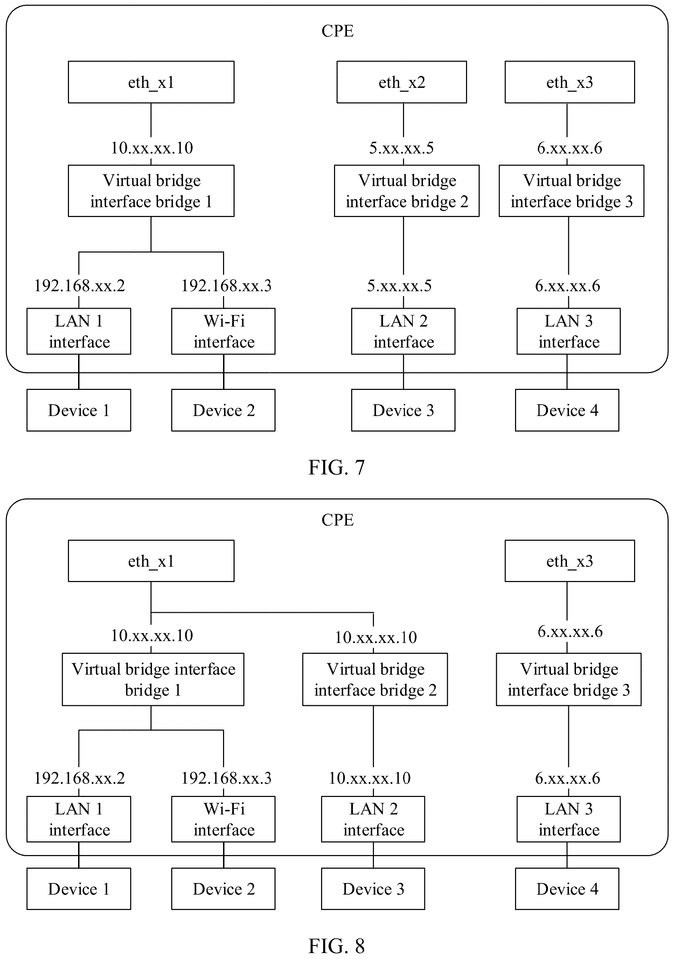

In an example shown in FIG. 7, configuration information received by the CPE is shown in Table 1.

**Table 1: Configuration information received by the CPE**

| Downlink interface | Mode type | APN |
|---|---|---|
| LAN 1 | Routing mode | APN 1 |
| Wi-Fi | Routing mode | APN 1 |
| LAN 2 | Bridge mode | APN 2 |
| LAN 3 | Bridge mode | APN 3 |

It should be understood that, a data structure of the configuration information received by the CPE may alternatively be in another data structure form, and the table form is used herein for ease of understanding.

Based on the foregoing configuration information, the CPE creates a virtual bridge interface bridge 1 for the LAN 1 interface and the Wi-Fi interface that are in the routing mode, and the LAN 1 interface and the Wi-Fi interface are configured on the virtual bridge interface. A device 1 is connected to the LAN 1 interface, and a device 2 is connected to the Wi-Fi interface.

Based on the foregoing configuration information, the CPE creates a virtual bridge interface for each downlink interface in the bridge mode. Specifically, virtual bridge interfaces bridge 2 and bridge 3 are created, the LAN 2 interface is configured on the virtual bridge interface bridge 2, and the LAN 3 interface is configured on the virtual bridge interface bridge 3. A device 3 is connected to the LAN 2 interface, and a device 4 is connected to the LAN 3 interface.

An uplink interface eth_x1 is further configured on the virtual bridge interface bridge 1, an uplink interface eth_x2 is further configured on the virtual bridge interface bridge 2, and an uplink interface eth_x3 is further configured on the virtual bridge interface bridge 3.

The CPE obtains a wide area network IP address 10.xx.xx.10 after successfully performing dial-up by using the APN 1, and configures the wide area network IP address on the virtual bridge interface bridge 1 and/or the uplink interface eth_x1.

The CPE obtains a wide area network IP address 5.xx.xx.5 after successfully performing dial-up by using the APN 2, and configures the wide area network IP address on the LAN 2 interface; and further, may configure the wide area network IP address on the virtual bridge interface bridge 2 and/or the uplink interface eth_x2.

The CPE obtains a wide area network IP address 6.xx.xx.6 after successfully performing dial-up by using the APN 3, and configures the wide area network IP address on the LAN 3 interface; and further, may configure the wide area network IP address on the virtual bridge interface bridge 3 and/or the uplink interface eth_x3.

The CPE separately configures local area network IP addresses for the LAN 1 interface and the Wi-Fi interface that are in the routing mode, for example, configures 192.168.xx.2 for the LAN 1 interface, and configures 192.168.xx.3 for the Wi-Fi interface.

In an example shown in FIG. 8, configuration information received by the CPE is shown in Table 2.

**Table 2: Configuration information received by the CPE**

| Downlink interface | Mode type | APN |
|---|---|---|
| LAN 1 | Routing mode | APN 1 |
| Wi-Fi | Routing mode | APN 1 |
| LAN 2 | Bridge mode | APN 1 |
| LAN 3 | Bridge mode | APN 2 |

It should be understood that, a data structure of the configuration information received by the CPE may alternatively be in another data structure form, and the table form is used herein for ease of understanding.

Based on the foregoing configuration information, the CPE creates a virtual bridge interface bridge 1 for the LAN 1 interface and the Wi-Fi interface that are in the routing mode, and the LAN 1 interface and the Wi-Fi interface are configured on the virtual bridge interface. A device 1 is connected to the LAN 1 interface, and a device 2 is connected to the Wi-Fi interface.

Based on the foregoing configuration information, the CPE creates a virtual bridge interface for each downlink interface in the bridge mode. Specifically, virtual bridge interfaces bridge 2 and bridge 3 are created, the LAN 2 interface is configured on the virtual bridge interface bridge 2, and the LAN 3 interface is configured on the virtual bridge interface bridge 3. A device 3 is connected to the LAN 2 interface, and a device 4 is connected to the LAN 3 interface.

An uplink interface eth_x1 is further configured on the virtual bridge interface bridge 1 and the virtual bridge interface bridge 2, and an uplink interface eth_x3 is further configured on the virtual bridge interface bridge 3. To be specific, a virtual bridge interface for configuring a downlink interface in a routing mode and a virtual bridge interface for configuring a downlink interface in a bridge mode may be configured with a same uplink interface, in other words, may use a same APN. For example, as shown in Table 2, the Wi-Fi interface in the routing mode and the LAN 2 interface in the bridge mode may use the same APN 1. Correspondingly, the same uplink interface eth_x1 is configured on the virtual bridge interface bridge 1 and the virtual bridge interface bridge 2.

The CPE obtains a wide area network IP address 10.xx.xx.10 after successfully performing dial-up by using the APN 1, and configures the wide area network IP address on the virtual bridge interface bridge 1 and the virtual bridge interface bridge 2; and further, may configure the wide area network IP address on the uplink interface eth_x1.

The CPE obtains a wide area network IP address 6.xx.xx.6 after successfully performing dial-up by using the APN 3, and configures the wide area network IP address on the virtual bridge interface bridge 3 and/or the uplink interface eth_x3.

The CPE separately configures local area network IP addresses for the LAN 1 interface and the Wi-Fi interface that are in the routing mode, for example, configures 192.168.xx.2 for the LAN 1 interface, and configures 192.168.xx.3 for the Wi-Fi interface.

It can be understood that, to implement the functions in the foregoing embodiments, the routing device includes corresponding hardware structures and/or software modules for performing the functions. A person skilled in the art should be easily aware that, in this application, the units and the method steps in the examples described with reference to embodiments disclosed in this application can be implemented by hardware or a combination of hardware and software. Whether a first function is performed by hardware or hardware driven by software depends on particular applications and design constraints of the technical solutions.

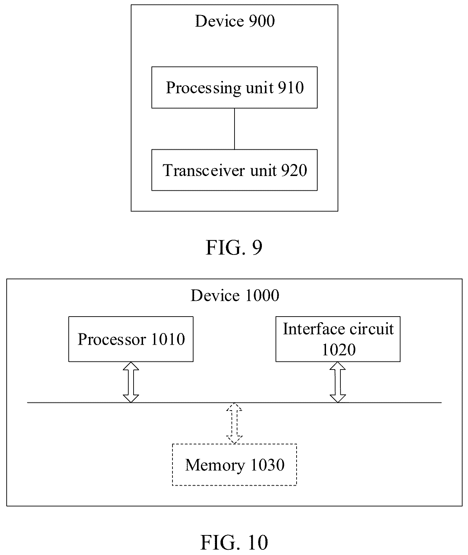

FIG. 9 and FIG. 10 are diagrams of possible structures of devices according to embodiments of this application. The devices may be configured to implement the functions of the routing device in the foregoing method embodiments, and therefore can also achieve the beneficial effects in the foregoing method embodiments. In embodiments of this application, the device may be the routing device (for example, the CPE) shown in FIG. 2, or may be a module (for example, a chip) used in the routing device.

As shown in FIG. 9, a device 900 includes a processing unit 910 and a transceiver unit 920. The device 900 is configured to implement the functions of the routing device in the method embodiment shown in FIG. 4.

For example, when the device 900 is configured to implement the functions of the routing device in the method embodiment shown in FIG. 4, the transceiver unit 920 is configured to receive first configuration information, where the first configuration information indicates to configure N downlink interfaces of the routing device to be in a bridge mode, and N is a positive integer greater than 1; and the processing unit 910 is configured to: create N virtual bridge interfaces based on the first configuration information; configure the N downlink interfaces and N uplink interfaces of the routing device on the N virtual bridge interfaces, where one uplink interface and one downlink interface are configured on each of the N virtual bridge interfaces, uplink interfaces configured on different virtual bridge interfaces are different, and downlink interfaces configured on different virtual bridge interfaces are different; and configure wide area network IP addresses of the N uplink interfaces on the N downlink interfaces, where wide area network IP addresses configured on different downlink interfaces are different.

For more detailed descriptions of the processing unit 910 and the transceiver unit 920, directly refer to related descriptions in the method embodiment shown in FIG. 4. Details are not described herein again.

As shown in FIG. 10, a device 1000 includes a processor 1010 and an interface circuit 1020. The processor 1010 and the interface circuit 1020 are coupled to each other. It can be understood that the interface circuit 1020 may be a transceiver or an input/output interface. Optionally, the device 1000 may further include a memory 1030, configured to store a program or instructions to be executed by the processor 1010, or store input data needed for running a program or instructions by the processor 1010, or store data generated after the processor 1010 runs a program or instructions.

When the device 1000 is configured to implement the method shown in FIG. 4, the processor 1010 is configured to implement the functions of the processing unit 910, and the interface circuit 1020 is configured to implement the functions of the transceiver unit 920.

When the foregoing device is a chip used in a routing device, the chip implements the functions of the routing device in the foregoing method embodiments. The chip receives information from another module in the routing device, or the chip sends information to another module in the routing device.

It can be understood that the processor in embodiments of this application may be a central processing unit (Central Processing Unit, CPU), or may be another general-purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a transistor logic device, a hardware component, or any combination thereof. The general-purpose processor may be a microprocessor or any conventional processor.

This application provides another example of a device. The device includes at least one processor and at least one memory. The at least one processor is coupled to the at least one memory. The at least one memory is configured to store a program or instructions. When the program or the instructions are executed by the at least one processor, the device is enabled to perform the method in the foregoing embodiments. For example, the device includes one processor and one memory. As shown in FIG. 10, the device 1000 includes one processor 1010 and one memory 1030. The processor 1010 is coupled to the memory 1030. The memory 1030 stores a program or instructions. When the program or the instructions stored in the memory 1030 are executed by the processor 1010, the device 1000 performs the method performed by the routing device in the foregoing embodiments.

The method steps in embodiments of this application may be implemented in hardware, or may be implemented in software instructions that can be executed by a processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk drive, a removable hard disk drive, a CD-ROM, or any other form of storage medium well-known in the art. For example, a storage medium is coupled to a processor, so that the processor can read information from the storage medium and write information into the storage medium. The storage medium may alternatively be a component of the processor. The processor and the storage medium may be located in an ASIC. In addition, the ASIC may be located in a routing device. The processor and the storage medium may alternatively exist in a device as discrete components.

All or some of the foregoing embodiments may be implemented by software, hardware, firmware, or any combination thereof. When the embodiments are implemented by software, all or some of the embodiments may be implemented in a form of a program product. The program product includes one or more programs or instructions. When the programs or the instructions are loaded and executed on a computer or a device, all or some of the processes or the functions in embodiments of this application are performed.

In embodiments of this application, unless otherwise specified or a logic conflict occurs, terms and/or descriptions in different embodiments are consistent and may be mutually referenced, and technical features in different embodiments may be combined into a new embodiment based on an internal logical relationship between the technical features.

In this application, "at least one" means one or more, and "a plurality of" means two or more. "And/or" describes an association relationship between associated objects, and indicates that three relationships may exist. For example, A and/or B may indicate the following cases: Only A exists, both A and B exist, and only B exists, where A and B may be in a singular form or a plural form. In the text descriptions of this application, the character "/" usually indicates an "or" relationship between the associated objects. In a formula in this application, the character "/" indicates a "division" relationship between the associated objects. "Including at least one of A, B, and C" may indicate the following cases: including A; including B; including C; including A and B; including A and C; including B and C; and including A, B, and C.

It can be understood that various numbers in embodiments of this application are merely intended for differentiation for ease of description, but not to limit the scope of embodiments of this application. Sequence numbers of the foregoing processes do not mean an execution sequence. The execution sequence of the processes should be determined based on functions and internal logic of the processes.

## Claims

1. A routing device configuration method, applied to a routing device, and comprising:
receiving first configuration information, wherein the first configuration information indicates to configure N downlink interfaces of the routing device to be in a bridge mode, and N is a positive integer greater than 1;
creating N virtual bridge interfaces based on the first configuration information;
configuring the N downlink interfaces and N uplink interfaces of the routing device on the N virtual bridge interfaces, wherein one uplink interface and one downlink interface are configured on each of the N virtual bridge interfaces, uplink interfaces configured on different virtual bridge interfaces are different, and downlink interfaces configured on different virtual bridge interfaces are different; and
configuring wide area network IP addresses of the N uplink interfaces on the N downlink interfaces, wherein wide area network IP addresses configured on different downlink interfaces are different.

2. The method according to claim 1, further comprising:
separately configuring routing rules corresponding to the N virtual bridge interfaces, wherein
the N virtual bridge interfaces comprise a first virtual bridge interface, and data transmission between an uplink interface and a downlink interface that are configured on the first virtual bridge interface complies with a routing rule corresponding to the first virtual bridge interface.

3. The method according to any one of claims 1 to 2, wherein the first configuration information further indicates to configure M downlink interfaces of the routing device to be in a routing mode, the M downlink interfaces are different from the N downlink interfaces, and M is a positive integer;
creating a second virtual bridge interface based on the first configuration information, wherein the second virtual bridge interface is different from the N virtual bridge interfaces;
configuring the M downlink interfaces and a first uplink interface on the second virtual bridge interface, wherein the first uplink interface is an uplink interface corresponding to the M downlink interfaces; and
configuring a local area network IP address for each of the M downlink interfaces.

4. The method according to claim 3, further comprising:
configuring an address mapping rule on the second virtual bridge interface, wherein the address mapping rule indicates a mapping relationship between local area network IP addresses configured on the M downlink interfaces and a wide area network IP address configured on the first uplink interface.

5. The method according to claim 3 or 4, further comprising:
receiving second configuration information, wherein the second configuration information indicates to modify a bridge mode of a first downlink interface of the N downlink interfaces to a routing mode, and the first downlink interface is configured on the first virtual bridge interface of the N virtual bridge interfaces;
deleting configuration information of the first downlink interface from the first virtual bridge based on the second configuration information, and configuring the first downlink interface on the second virtual bridge interface;
deleting a wide area network IP address configured on the first downlink interface, and configuring a local area network IP address for the first downlink interface; and
configuring, on the second virtual bridge interface, a mapping relationship between the local area network IP address configured on the first downlink interface and the wide area network IP address configured on the first uplink interface.

6. The method according to any one of claims 1 to 5, wherein the N downlink interfaces comprise N local area network LAN interfaces, or the N downlink interfaces comprise N Wi-Fi interfaces, or the N downlink interfaces comprise at least one LAN interface and at least one W-Fi interface.

7. A routing device configuration method, comprising:
receiving first configuration information, wherein the first configuration information indicates to configure N downlink interfaces of a routing device to be in a bridge mode, and configure M other downlink interfaces of the routing device to be in a routing mode, wherein both N and M are positive integers;
creating N virtual bridge interfaces and a second virtual bridge interface based on the first configuration information;
configuring the N downlink interfaces and N uplink interfaces of the routing device on the N virtual bridge interfaces, and configuring the M downlink interfaces and a first uplink interface on the second virtual bridge interface, wherein the first uplink interface is an uplink interface corresponding to the M downlink interfaces, one uplink interface and one downlink interface are configured on each of the N virtual bridge interfaces, uplink interfaces configured on different virtual bridge interfaces are different, and downlink interfaces configured on different virtual bridge interfaces are different; and
configuring wide area network IP addresses of the N uplink interfaces on the N downlink interfaces, wherein wide area network addresses configured on different downlink interfaces are different, and configuring a local area network IP address for each of the M downlink interfaces.

8. The method according to claim 7, further comprising:
separately configuring routing rules corresponding to the N virtual bridge interfaces, wherein
the N virtual bridge interfaces comprise a first virtual bridge interface, and data transmission between an uplink interface and a downlink interface that are configured on the first virtual bridge interface complies with a routing rule corresponding to the first virtual bridge interface.

9. The method according to claim 7 or 8, further comprising:
configuring an address mapping rule on the second virtual bridge interface, wherein the address mapping rule indicates a mapping relationship between local area network IP addresses configured on the M downlink interfaces and a wide area network IP address configured on the first uplink interface.

10. The method according to any one of claims 7 to 9, wherein the N downlink interfaces comprise N local area network LAN interfaces, or the N downlink interfaces comprise N Wi-Fi interfaces, or the N interfaces comprise at least one LAN interface and at least one W-Fi interface.

11. A routing device, comprising a unit or a module for performing the method according to any one of claims 1 to 6, or comprising a unit or a module for performing the method according to any one of claims 7 to 10.

12. A routing device, comprising at least one processor, wherein the at least one processor is coupled to at least one memory, and the at least one processor is configured to read a program stored in the at least one memory, to perform the method according to any one of claims 1 to 6, or perform the method according to any one of claims 7 to 10.

13. A chip system, comprising at least one processor, wherein the at least one processor is coupled to at least one memory, and the at least one processor is configured to read a program stored in the at least one memory, to perform the method according to any one of claims 1 to 6, or implement the method according to any one of claims 7 to 10.

14. A readable storage medium, wherein the readable storage medium stores a program, and when the program is executed by a routing device, the method according to any one of claims 1 to 6 is implemented, or the method according to any one of claims 7 to 10 is implemented.

15. A program product, wherein when the program product is run on a routing device, the routing device is enabled to perform the method according to any one of claims 1 to 6, or perform the method according to any one of claims 7 to 10.
